# EUROPEAN PATENT APPLICATION

(11) **EP 4 807 623 A1**
(43) Date of publication of application: **16.09.2026**
(21) Application number: 25226122.7
(22) Date of filing: 22.12.2025
(51) Int. Cl.: G06N 3/0442, G06F 16/3329, G06F 16/334, G06N 3/045, G06N 3/067, G06N 5/022, G06N 5/04

(54) **METHOD AND SYSTEM FOR METHODOLOGY INSPIRATION RETRIEVAL FOR SCIENTIFIC RESEARCH PROBLEMS**

(30) Priority: 11.03.2025 IN 202521021803
(71) Applicant: Tata Consultancy Services Limited, Mumbai, Maharashtra 400 021 (IN)
(72) Inventor: GARIKAPARTHI, Aniketh, 411057 Pune (IN); PATWARDHAN, Manasi Samarth, 411057 Pune (IN); VIG, Lovekesh, 110001 New Delhi (IN)
(74) Representative: Goddar, Heinz J.

(57) **Abstract**

The embodiments of the present disclosure herein address unresolved problems of existing idea generation approaches depart from the realistic setting, where the key challenge lies in prioritizing retrieval of the literature most conducive to generating novel research ideas, provided only the research problem and its motivation as the query. Embodiments herein provide a method and system for methodology inspiration retrieval for scientific research problems. The system leverages a rich citation network within a research domain to derive a directed Methodology Adjacency Graph (MAG). The directed MAG captures methodological lineage, with the corresponding citation contexts from the citing papers. Further, a dataset is curated to fine-tune retrievers and evaluate MIR task by extending multi-cite dataset. To fine-tune a more effective retrieval model for MIR, a triplet loss is formulated by synthesizing samples from the directed MAG. Further, a reasoning-intensive process essential for MIR is simulated by extending a predefined LLM-based re-ranker.

## Description

### CROSS-REFERENCE TO RELATED APPLICATIONS AND PRIORITY

The present application claims priority to Indian application no. 202521021803 filed on March 11, 2025.

### TECHNICAL FIELD

The disclosure herein generally relates to the field of methodology inspiration retrieval (MIR) by using specialized retrievers and harnessing the reasoning capabilities of Large Language Models (LLMs), and more particularly, a method and system for methodology inspiration retrieval for scientific research problems by using specialized retrievers and harnessing the reasoning capabilities of Large Language Models (LLMs).

### BACKGROUND

In recent years, Large Language Models (LLMs) have gained popularity as potential tools for novel method synthesis, also referred to as idea generation. A research problem, either formulated manually or identified from a seed paper present in the existing literature, serves as an input for this task. A few existing solutions use iterative brainstorming for idea generation with no conditioning on the existing literature. Whereas few solutions condition the process on existing data. This data typically includes knowledge sub-graphs constructed from concepts and relationships of previous studies belonging to the domain of the problem, citation neighbors of the seed paper. This augmentation allows an LLM to ground the generated idea in the existing knowledge, reducing the likelihood of hallucinations.

However, these approaches face major limitations. Firstly, the abstracts of the seed papers, which are used to retrieve and rank relevant literature, have mentions of methodology, experimental design and results of the seed paper. Having such mentions can bias the retrieval process, reinforcing information from the seed paper and thus diminishing the novelty of downstream idea generation. Secondly, the retrieval models commonly used for augmenting idea generation are either trained to learn sentence-based semantic similarity or generic inter-document relationship. This can lead to immaterial retrievals like papers with keyword overlap, where a naïve retrieval fetches a paper on sentence compression. On the other hand, to derive inspiration for developing solutions to a research problem, humans draw from prior corpus not just based on the semantics of the abstract, but through deeper analysis evaluating the potential applicability of different solutions to the investigated problem. Thus, current idea generation approaches depart from the realistic setting, where the key challenge lies in prioritizing retrieval of the literature most conducive to generating novel research ideas, provided only the research problem and its motivation as the query.

### SUMMARY

Embodiments of the present disclosure present technological improvements as solutions to one or more of the above-mentioned technical problems recognized by the inventors in conventional systems. For example, in one embodiment, a method for methodology inspiration retrieval for scientific research problems by using specialized retrievers and harnessing the reasoning capabilities of Large Language Models (LLMs) is provided. The processor-implemented method includes receiving, via an Input/Output (I/O) interface, a research problem and a motivation of the research problem as a query for a methodology inspiration retrieval (MIR), curating a predefined dataset to derive a directed Methodology Adjacency Graph (MAG), formulating a joint triplet loss by synthesizing a plurality of samples from the directed MAG for improvements in the MIR task, fine-tuning a predefined retrieval model using the derived directed MAG and the formulated joint triplet loss, executing the received query using the fine-tuned retrieval model to obtain results, and simulating a reasoning-intensive process essential for the MIR task by extending a predefined LLM-based re-ranking using a multi-step framework to improve rankings of the results obtained to cover maximum ground truth methodologically relevant cited papers for respective proposals.

In another embodiment, a system for methodology inspiration retrieval for scientific research problems by using specialized retrievers and harnessing the reasoning capabilities of Large Language Models (LLMs) is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive, via an Input/Output (I/O) interface, a research problem and a motivation of the research problem as a query for a methodology inspiration retrieval (MIR), curating a predefined dataset to derive a directed Methodology Adjacency Graph (MAG), formulating a joint triplet loss by synthesizing a plurality of samples from the directed MAG for improvements in the MIR task, fine-tuning a predefined retrieval model using the derived directed MAG and the formulated joint triplet loss, executing the received query using the fine-tuned retrieval model to obtain results, and simulating a reasoning-intensive process essential for the MIR task by extending a predefined LLM-based re-ranking using a multi-step framework to improve rankings of the results obtained to cover maximum ground truth methodologically relevant cited papers for respective proposals.

In yet another aspect, there are provided one or more non-transitory machine-readable information storage mediums comprising one or more instructions, which when executed by one or more hardware processors causes a method for methodology inspiration retrieval for scientific research problems by harnessing the reasoning capabilities of Large Language Models (LLMs) is provided. The processor-implemented method includes receiving, via an Input/Output (I/O) interface, a research problem and a motivation of the research problem as a query for a methodology inspiration retrieval (MIR), curating a predefined dataset to derive a directed Methodology Adjacency Graph (MAG), formulating a joint triplet loss by synthesizing a plurality of samples from the directed MAG for improvements in the MIR task, fine-tuning a predefined retrieval model using the derived directed MAG and the formulated joint triplet loss, executing the received query using the fine-tuned retrieval model to obtain results, and simulating a reasoning-intensive process essential for the MIR task by extending a predefined LLM-based re-ranking using a multi-step framework to improve rankings of the results obtained to cover maximum ground truth methodologically relevant cited papers for respective proposals.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for methodology inspiration retrieval (MIR) for scientific research problems, according to some embodiments of the present disclosure.
FIG. 2 is a functional block diagram for MIR for scientific research problems, according to some embodiments of the present disclosure.
FIG. 3A and 3B is an exemplary flow diagram illustrating a processor-implemented method for MIR for scientific research problems, according to some embodiments of the present disclosure.
FIG. 4 is a block diagram for data construction, according to some embodiments of the present disclosure.
FIG. 5 is an exemplary flow diagram illustrating a processor-implemented method for curating training data using a computational linguistics corpus, according to some embodiments of the present disclosure.
FIG. 6 is an exemplary flow diagram illustrating a processor-implemented method for curating training data by extracting the bibliography section, according to some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There has been a surge of interest in harnessing the cognitive reasoning capabilities of Large Language Models (LLMs) to accelerate scientific discovery. While existing approaches primarily rely on grounding the discovery process within the relevant literature, results vary greatly with the quality and nature of the retrieved literature.

To address this gap, embodiments herein provide a method and system for methodology inspiration retrieval for scientific research problems. The system is configured to leverage the rich citation network within a research domain to derive a directed Methodology Adjacency Graph (MAG). The directed MAG captures methodological lineage, where edges are annotated with the citation intents pivotal for the task, viz. 'methodology' or 'non-methodology', with the corresponding citation contexts from the citing papers. Further, the system is configured to curate a dataset to fine-tune retrievers and evaluate the MIR task by extending the multi-cite dataset originally designed for citation intent classification. To fine-tune a more effective retrieval model for MIR, a triplet loss is formulated by synthesizing samples from the directed MAG. Further, a reasoning-intensive process essential for the MIR is simulated by extending the existing LLM-based re-rankers. This extension leads to significant performance improvements.

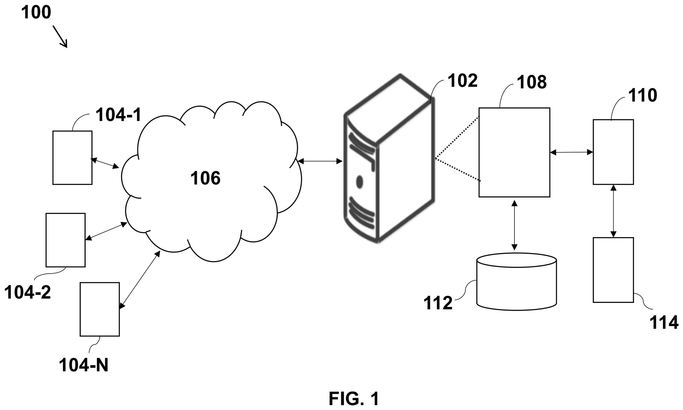

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

FIG. 1 illustrates a block diagram of a system 100 for the MIR for scientific research problems, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, referred as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

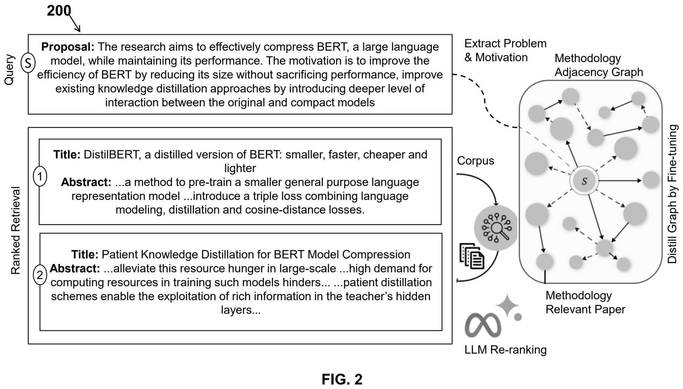

FIG. 2 is a functional block diagram 200 to illustrate the system for methodology inspiration retrieval for scientific research problems, according to some embodiments of the present disclosure. The system is configured to leverage the rich citation network within a research domain to derive a directed Methodology Adjacency Graph (MAG). The directed MAG captures methodological lineage, where edges are annotated with the citation intents pivotal for the task, viz. 'methodology' or 'non-methodology', with the corresponding citation contexts from the citing papers. Further, the system is configured to curate a dataset to fine-tune retrievers and evaluate the MIR task by extending the multi-cite dataset originally designed for citation intent classification. To fine-tune a more effective retrieval model for MIR, a triplet loss is formulated by synthesizing samples from the directed MAG. Further, a reasoning-intensive process essential for the MIR is simulated by extending the existing LLM-based re-rankers. This extension leads to significant performance improvements.

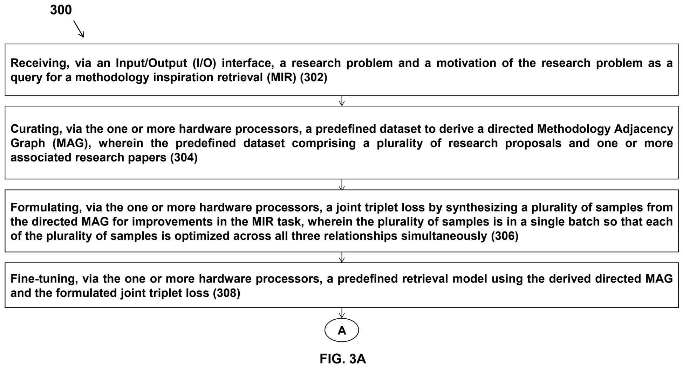

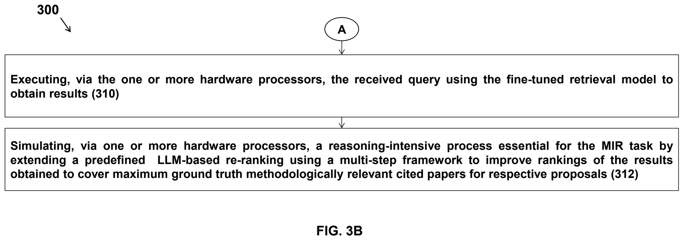

FIGS. 3A and 3B are flow diagrams illustrating a processor-implemented method 300 for methodology inspiration retrieval for scientific research problems implemented by the system 100 of FIG. 1, in accordance with an embodiment of the present disclosure. Functions of the components of the system 100 are now explained through steps of flow diagram in FIGS. 3A-3B, according to some embodiments of the present disclosure. In the method and system for methodology inspiration retrieval for scientific research problems.

Initially, at step 302 of the processor-implemented method 300, the one or more hardware processors 108 are configured by the programmed instructions to receive, via an Input/Output (I/O) interface, a research problem and a motivation of the research problem as a query for a methodology inspiration retrieval (MIR).

At the next step 304 of the processor-implemented method 300, the one or more hardware processors 108 are configured by the programmed instructions to curate a predefined dataset to derive a directed Methodology Adjacency Graph (MAG). The predefined dataset comprises a plurality of research proposals and one or more associated research papers. The directed MAG is distilled to a retriever by task specific fine tuning and subsequently proposes a reasoning-driven LLM based re-ranking strategy to enhance retrieval precision.

In one aspect, wherein:
1. a research proposal (*P*): $P = \left\{R, M\right\}$ wherein *R* is the research problem and *M* is the motivation behind the problem.
2. Cited papers (*L_{P}*): ${L}_{P} = \left\{{l}^{1},{l}^{2},…,{l}^{n}\right\}$ wherein *l^{k}* is the *k*^{th} cited paper in the proposal P.
3. Citation Contexts (*C_{P}*): ${C}_{P} = \left\{\left\{{c}^{1}\right\}, \left\{{c}^{2}\right\}, …,\left\{{c}^{n}\right\}\right\}$ wherein {*c^{k}*} is the set of citation contexts for the cited paper *l*^{k}.
4. Citation intents (*I_{P}*): ${I}_{P} : \left\{\left\{{i}^{1}\right\}, \left\{{i}^{2}\right\}, …, \left\{{i}^{n}\right\}\right\} ,$ wherein {*i*^{k}} is the set of intents for citation contexts {*c*^{k}}. The intent here can be of two types, viz., methodology (uses, extents) and non-methodology derived from the original intent labels in MultiCite. Note that one cited paper *l*^{k} can have one or more contexts {*c*^{k}}, with distinct intents {*i*^{k}}. These sample formulate a methodology adjacency graph, where a node is a proposal *P* with its neighbors as cited paper *L_{P}* and directed edges annotated with intent *I_{P}* and citation context *C_{P}.* It would be noted that a node is treated as a proposal for an outgoing edge, whereas a cited paper is for an incoming edge.

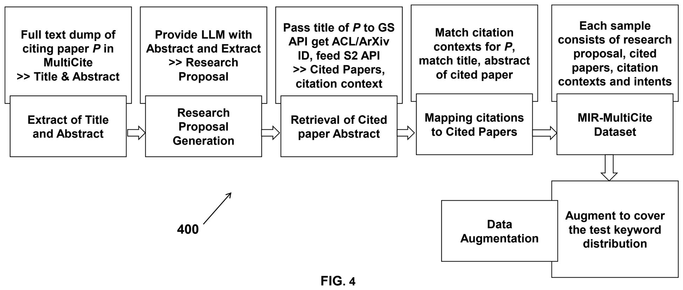

FIG. 4 is a block diagram for data construction, according to some embodiments of the present disclosure. In one embodiment, the curation of the predefined dataset comprising one or more steps as follows. To define a new task of MIR, a research proposal which comprises of a research problem and its motivation *P* = {*R*, *M*}, for which a novel methodology is to be developed and a literature corpus *D,* comprising of *N* research papers {*l*¹,*l*²,...,*l^{N}*} are given. The task is to provide a ranking of top-k papers within the corpus based on applicability towards developing a solution for the research problem mentioned in the proposal.

There are two settings for simulating the literature corpus *D* such as a restricted corpus and an extended corpus. The constrained corpus is limited to cited papers within the test set. This introduces potential timeline contamination risks, as there is no guarantee that the corpus papers predate the test proposal. However, it ensures no overlap with the cited papers in the training set. Comprising all cited papers from both the training set and ground-truth citations associated with the test proposals. Leveraging temporal splits in MIR-MultiCite, this corpus eliminates timeline contamination concerns. More importantly, it tests retriever performance across a more expensive and diverse corpus.

It is assumed that the research proposal comes from one of the domains for which papers are present within corpus. There are no existing retrieval datasets readily adaptable for the MIR task. Therefore, a dataset is curated for evaluating the MIR. For this, a pair of research proposals and corresponding research papers could serve as inspirations to build methodologies for the proposal. A MultiCite dataset originally designed for citation context intent classification addresses the key requirements of the task and provide a gold standard citation intent labels, making it a strong fit for the task. The MultiCite comprises 12,653 citation context (one or more sentences) from over 1200 research papers in the field of computational linguistics in English language. The MultiCite is leveraged to construct the directed MAG and simulate the MIR task.

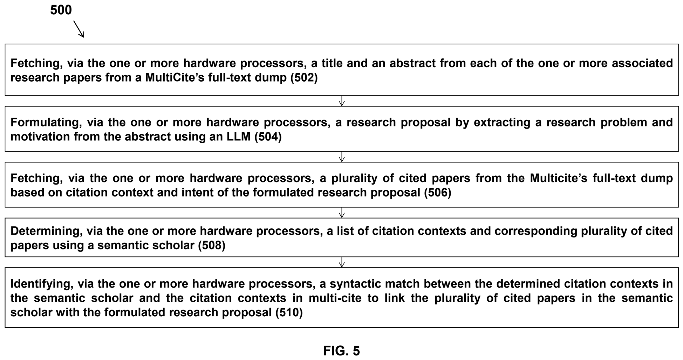

FIG. 5 is an exemplary flow diagram 500 illustrating a processor-implemented method for augmenting training data using a computational linguistics corpus, according to some embodiments of the present disclosure. Initially, at the step 502, the one or more hardware processors 108 are configured by the programmed instructions to fetch a title and an abstract from each of the one or more associated research papers from a Multicite's full-text dump.

At the step 504, the one or more hardware processors 108 are configured by the programmed instructions to formulate a research proposal by extracting a research problem and motivation from the abstract using a predefined LLM.

At the next step 506, the one or more hardware processors 108 are configured by the programmed instructions to fetch a plurality of cited papers from the Multicite's full-text dump based on citation context and intent of the formulated research proposal.

At the next step 508, the one or more hardware processors 108 are configured by the programmed instructions to determine a list of citation contexts and corresponding plurality of cited papers using a semantic scholar.

Finally, at the last step 510, the one or more hardware processors 108 are configured by the programmed instructions to identify a syntactic match between the determined citation contexts in the semantic scholar and the citation contexts in multi-cite to link the plurality of cited papers in the semantic scholar with the formulated research proposal.

A multi-step workflow for the construction of MIR-MultiCite is illustrated in the FIG 4. A title and abstract are fetched for each citing paper *P* from MultiCite's full-text dump. Further, research proposals *P* are extracted by extracting the research problems *R* and motivations *M* from the abstracts of the citing papers using the LLM. The description of the citation intents defined in MultiCite is provided in table 1.

**Table 1**

| **Citation Intent** | **Description** |
|---|---|
| Background | Provides relevant information for this domain. |
| Motivation | Provides motivation for the source paper. For instance, it illustrates the need for data, goals, methods, etc. |
| Uses | Use an idea, method, tool, etc. of the target paper. |
| Extends | Builds upon or improves the cited work |
| Similarities | Expresses similarities between the source and the target paper |
| Differences | Expresses differences between the target paper or between the source and the target paper |
| Future Work | Potential avenue for future research. Often corresponds to hedging or speculative language about work not yet performed. |

For each citing paper *P* with the citation context *c^{k}* and intent *i^{k}* in Multicite, cited paper *l^{k}* are fetched. The title and abstract of *P* are passed to the Google Search API and/or Semantic Scholar (S2) to determine its ACL or ArXiv ID. This is further passed to Semantic Scholar (S2) API to obtain the list of citation contexts and corresponding cited papers *l* for *P.* For citing paper *P,* if a syntactic (subsequence) match between the citation contexts *c^{j}* in S2 and *c^{k}* in MultiCite is found, cited paper *l^{j}* in S2 as *l^{k}* are linked with the proposal *P,* the citation context *c^{k}* and intent *i^{k}.* Otherwise, a bibliography section of *P* is extracted from its full-text dump and fed it along with the citation context *c^{k}* including the citation mark to the LLM and task it to determine an entry of the cited paper *l^{k}* in the bibliography.

In another embodiment, the predefined dataset is curated. Herein, the title of *l^{k}* from the identified entry in the Bibliography is used to fetch the paper, using the S2 API. Finally, a manual verification is conducted for around 20% of the extractions of *l^{k}* for *c^{k}* in *P* to find them. For effective distillation of the directed MAG, consistent representation of research subdomains across the splits of MIR-MultiCite is crucial. To check the existing dataset's domain representation, a predefined scientific IE module is employed to extract keywords from the proposals. A prominent set of keywords are identified for the test set proposals have minimal representation in the training data. Further, to tackle this, the training data is augmented using the ArXiv computational linguistics corpus. Titles, abstracts and citation texts are retrieved using a S2 API. Moreover, the research proposals are extracted from these papers and a SciBERT based citation intent classifier trained on MultiCite is employed to fetch citation intent as the weak labels for the citation contexts. Only a fraction of these papers is augmented to the MIR-MultiCite train set, allowing consistent domain representation across splits and restricting possible noise introduced by weakly labeled data and the resulting MIR-MultiCite augmented dataset is released.

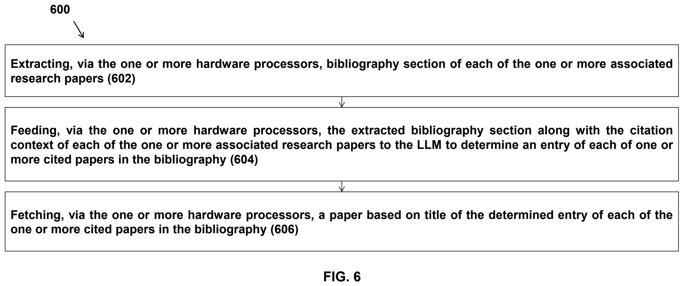

FIG. 6 is an exemplary flow diagram illustrating a processor-implemented method for curating training data by extracting the bibliography section, according to some embodiments of the present disclosure. Initially, at the step 602, the one or more hardware processors 108 are configured by the programmed instructions to extract bibliography section of each of the one or more associated research papers.

At the next step 604, the one or more hardware processors 108 are configured by the programmed instructions to feed the extracted bibliography section along with the citation context of each of the one or more associated research papers to the LLM to determine an entry of each of one or more cited papers in the bibliography.

Finally, at the step 606, the one or more hardware processors 108 are configured by the programmed instructions to fetch a paper based on title of the determined entry of each of the one or more cited papers in the bibliography. The dataset herein is restricted to the computational linguistics domain and papers in the English language, however, given the availability of domain-specific research papers, the task-specific fine-tuning and re-ranking techniques may be applicable for the MIR task across domains. Further, the domain specific data augmentation experiments, which lead to substantial improvements in retrieval performance, hints at the same.

Once, the directed MAG is derived, then at the next step 306 of the processor-implemented method 300, the one or more hardware processors 108 are configured by the programmed instructions to formulate a joint triplet loss by synthesizing a plurality of samples from the directed MAG for improvements in the MIR task. Herein, the plurality of samples is in a single batch so that each of the plurality of samples is optimized across all three relationships simultaneously.

At the next step 308 of the processor-implemented method 300, the one or more hardware processors 108 are configured by the programmed instructions to fine-tune a predefined retrieval model using the derived directed MAG and the formulated joint triplet loss.

To synthesize samples for the required triplets, the directed MAG constructed from the training data is leveraged. The aim is to bring the representations of a proposal *P,* closer to a cited paper *l^{k}* specifically serving as the methodology inspiration to the problem in *P.* A citation context *c^{k}* of *l^{k}* is utilized to describe how *l^{k}* acts as the methodology inspiration, as an additional signal to serve as a vital link between the *l^{k}* and *P.* This formulation allows the retriever to capture the subtle but significant differences in methodology and non-methodology-related citations for a problem, as opposed to superficial similarities, allowing to create a more sophisticated MIR. With the fine-tuned retriever, the representations of the papers are pre-computed in the literature corpus *D.* During inference, the model only requires a test proposal *P* as an input, without needing any information of its cited papers or citation contexts, to produce its embeddings to retrieve the methodologically relevant papers from *D.* The triplet margin loss for a *t^{th}* triplet is as follows: ${L}_{t} = max \left\{d\left(a, {p}^{+}\right)-d\left(a, {p}^{-}\right)+m, 0\right\}$ wherein *d* is distance function and *m* are the loss margin hyper-parameter, empirically set to 1.
Further, the *L₂* norm distance function is: $d \left({P}_{A}, {P}_{B}\right) = {\left‖{ν}_{A}-{ν}_{B}\right‖}_{2}$ wherein *v_{A}* and *v_{B}* represent the vectors between which the Euclidean distance is to be calculated. A joint triplet loss objective is used to incorporate three distinct triplets, formulated using samples depicting the relationship between a tuple (P, *l^{k}, c^{k}*).

For fine tuning, it is ensured that the triplets synthesized for a sample are in a single batch so that each sample is optimized across all three relationships simultaneously, enabling the model to learn a more cohesive understanding of the methodologically relevant citation patterns. Each triplet comprises of an anchor (*a*), a positive sample (*p*⁺) and a hard (*p*⁻⁻) or a soft negative sample (*p*⁻). $Triplet 1 : \left\{\begin{matrix}a = P \\ {p}^{+} ∼ {l}^{k} ϵ {L}_{p} \left|∃{c}_{j}^{k}:{i}_{j}^{k}∈\left\{MI\right\}\right. \\ {p}^{- -} = \left.l\right| arg S l ∈ D - {L}_{p} max IM \left({p}^{⇀}, {l}^{⇀}\right) OR \\ {p}^{-} ∼ l ∈ D - {L}_{p}\end{matrix}\right\}$ wherein *MI* denotes the set of methodology In-tents, viz. uses, extends, *P* and *l* are domain representations and SIM is a function computing vector similarity. Triplet 1 brings the positively sampled methodologically relevant papers *l^{k}* closer to the problem defined in *P* relative to the papers that belong to the same domain but may not be methodologically relevant. To compute domain similarity, scientific named entities are extracted from *P* and abstracts of papers in *D* using categorized into task, method, metric, material, and genetic. The scientific entities are stored in a text-concatenation format, sorted alphabetically, and create a vector representation using SciBERT.

Triplet 2 brings the representation of the research problem *P* closer to the representation of its solution described through its methodology citation context *c^{k}* rather than the representation of another research problem *P'* citing similar papers but with a distinct solution. $Triplet 2 : \left\{\begin{matrix}a = {c}^{k} \left|{i}^{k}∈\left\{MI\right\}\right. \\ {p}^{+} = P \\ {p}^{- -} ∼ P ′ \left|L′∩L\neq ∅ OR\right. \\ {p}^{-} ∼ P ′ \left|P′∈Q-P\right.\end{matrix}\right\}$ wherein Q represents the set of all proposals.

Triplet 3 facilitates bringing the representations of the cited paper *l^{k}* serving as the inspiration for the methodology for the problem in *P* closer to the embedding of the citation context *c^{k}* capturing the applicability of that methodology. The intent is that these representations are brought closer as opposed to the representations of the cited papers with no methodological applicability. Further, a hyper parameter *α* is employed to select the ration of hard and soft negatives per triplet. $Triplet 3 : \left\{\begin{matrix}a = {c}^{k} \left|{i}^{k}∈\left\{MI\right\}\right. \\ {p}^{+} = {l}^{k} \\ {p}^{- -} ∼ {l}^{j} ∈ L \left|∀{c}^{j}:{i}^{j}∉\left\{MI\right\}OR\right. \\ {p}^{-} ∼ l ∈ D - L\end{matrix}\right\}$

Once the predefined retrieval model is fine-tuned, then at the next step 310 of the processor-implemented method 300, the one or more hardware processors 108 are configured by the programmed instructions to execute the received query using the fine-tuned retrieval model to obtain results.

Finally, at the last step 312 of the processor-implemented method 300, the one or more hardware processors 108 are configured by the programmed instructions to simulate a reasoning-intensive process essential for the MIR task by extending a predefined LLM-based re-ranking using a multi-step framework to improve rankings of the results obtained to cover maximum ground truth methodologically relevant cited papers for respective proposals. The multi-step framework to improve the rankings of the results comprising (i) analyzing a core problem using the LLM to list one or more sub-problems and generate a generic action plan to solve the problem, (ii) analyzing the applicability of each retrieved paper towards solving the core problem and providing a relevance judgment to assess the paper's methodological relevance, given a criteria for assessment along with outputs from (i) and (ii).

The complex nature of MIR demands advanced reasoning capabilities that extend beyond purely embedding-based retrievals. The development split proposals of the dataset and the elbow method is used to find an appropriate k value, such that the top k-retrievals of the fine-tuned retriever cover maximum ground truth methodologically relevant cited papers for the respective proposals.

There are several re-ranking strategies including a pointwise and an MIR-Agent methods. In the point wise, each of the top-k ranked papers are provided to the LLM and task it to provide a binary relevance judgment, indicating its methodological relevance to the proposal. The re-ranked list prioritizes papers with positive judgement, preserving the original retrieved ordering. The MIR-Agent is a framework tailored for the task of MIR. In the MIR-Agent framework, the LLM is tasked to (i) analyze the proposal to list sub-problems and generate a generic action plan to solve the problem, (ii) analyze the applicability of each top-k retrieved paper towards solving the core problem, provided the proposal analysis and (iii) provide a relevance judgement to assess the paper's methodological relevance, given a criteria for assessment along with the output from (i) and (ii). There are four prompt settings that are considered with combinations of zero-shot and few-shot prompting and using either the abstracts or full text of the top-k ranked papers. The full paper setting allows the LLMs to gain deeper insights into methodologies, results, and discussions that might be missed with the limited context of the abstract. For this analysis, the system is configured to identify a sub-set of the test-set proposals for which the full text of top-k retrieved papers is available.

### Experiment:

From the proposal, the following keywords are extracted, categorized and sorted for domain representation.
**Proposal Keyword:** BERT compression, model compression, model compression approach, our approach, GLUE benchmark, knowledge distillation approaches. Further, a similarities with the citing paper abstracts are computed as follows: **Highest similarity Paper 1 keywords:** context-aware sentiment attention mechanism, knowledge-aware language representation, label-aware masked language model, language representation model, pre-trained language representation models, pre-trained models, language understanding, NLP tasks, pre-training task, SentiLARE, sentiment analysis, sentiment analysis tasks.
**Highest similarity Paper 2 keywords:** data programming approach, data programming paradigm, deep learning architectures, deep learning methods, ML approaches, weak supervision methods, deep learning architectures, discourse analysis literature, expert-composed heuristics, generative model, handcrafted-feature approaches, learning discourse structure, multi-party dialogue, Snorkel framework. From this sample example, It can be seen that the use of the method entity has a marginal role in computing domain similarity, and empirically it does not introduce methodology-specific sampling biases with potential links between proposal problems and possible solution methods.

Re-ranking strategies as follows:
(1) Listwise: It provides top k retrieved papers to the LLM and tasks it to re-rank them based on their methodological relevance to the given proposal.
(2) Pairwise: A tournament-style pairwise comparison is implemented. Each round involves intelligently creating k/2 pairs of the retrieved papers from the last round such that similar performing papers are pitched against each other. For each pair, the LLM is tasked to judge which paper shares higher methodological insight into the proposal. A point to the paper with more insight is assigned. Scores across three rounds are aggregated by summing the wins for each paper to rank them.

Full paper re-ranking - Extraction is limited till the methodology section because it contains the most critical information for the task, whereas subsequent sections provided less relevant data and led to poorer performance.

| **Model** | **Pointwise** | | | | **MIR-Agent** | | | |
|---|---|---|---|---|---|---|---|---|
| | **Zero Shot** | | **Few Shot** | | **Zero Shot** | | **Few Shot** | |
| | **Abstract** | **Full Paper** | **Abstract** | **Full Paper** | **Abstract** | **Full Paper** | **Abstract** | **Full Paper** |
| | Abstract | Full | Abstract | Full | Abstract | Full | Abstract | Full |
| | | Paper | | Paper | | Paper | | Paper |
| | 65.98_{R@3} | 67.68_{R@3} | 69.37_{R@3} | 68.19_{R@3} | 66.40_{R@3} | 66.40_{R@3} | 67.06_{R@3} | 65.75_{R@3} |
| Llama3.1 70B | 70.79_{R@5} | 71.64_{R@5} | 72.76_{R@5} | 72.48_{R@5} | 75.48_{R@5} | 74.02_{R@5} | 74.96_{R@5} | 74.80_{R@5} |
| | 62.23_{mAP} | 62.90_{mAP} | 64.01_{mAP} | 65.27_{mAP} | 64.84_{mAP} | 64.79_{mAP} | 65.11_{mAP} | 65.04_{mAP} |
| | 69.92_{R@3} | 69.37_{R@3} | 69.88_{R@3} | 70.49_{R@3} | 69.94_{R@3} | 69.66_{R@3} | 69.24_{R@3} | 72.49_{R@3} |
| Gemini 1.5 | 74.30_{R@5} | 74.51_{R@5} | 76.21_{R@5} | 74.18_{R@5} | 75.03_{R@5} | 72.77_{R@5} | 74.60_{R@5} | 74.75_{R@5} |
| Pro-001 | 65.65_{mAP} | 66.77_{mAP} | 64.32_{mAP} | 65.44_{mAP} | 65.59_{mAP} | 65.55_{mAP} | 66.79_{mAP} | 68.24_{mAP} |

| *Baseline* | *Improvements* | | | | | | | |
|---|---|---|---|---|---|---|---|---|
| 66.84_{R@3} | 3.08_{R@3} | 2.53_{R@3} | 3.04_{R@3} | 3.65_{R@3} | 3.10_{R@3} | 2.82_{R@3} | 2.40_{R@3} | 5.65_{R@3} |
| 71.64_{R@5} | ↑ | ↑ | ↑ | ↑ | ↑ | ↑ | ↑ | ↑ |
| 62.47_{mAP} | 2.66_{R@5} | 2.87_{R@5} | 4.57_{R@5} | 2.54_{R@5} | 3.39_{R@5} | 1.13_{R@5} | 2.96_{R@5} | 3.11_{R@5} |
| | ↑ | ↑ | ↑ | ↑ | ↑ | ↑ | ↑ | ↑ |
| | 3.18_{mAP} | 4.30_{mAP} | 1.85_{mAP} | 2.97_{mAP} | 3.12_{mAP} | 3.08_{mAP} | 4.32_{mAP} | 5.77_{mAP} |
| | ↑ | ↑ | ↑ | ↑ | ↑ | ↑ | ↑ | ↑ |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of current idea generation approaches, wherein current solutions depart from the realistic setting, where the key challenge lies in prioritizing retrieval of the literature most conducive to generating novel research ideas, provided only the research problem and its motivation as the query. Embodiments herein provide the method and system for methodology inspiration retrieval for scientific research problems. The system is configured to leverage the rich citation network within a research domain to derive a directed Methodology Adjacency Graph (MAG). The MAG captures methodological lineage, where edges are annotated with the citation intents pivotal for the task, viz. 'methodology' or 'non-methodology', with the corresponding citation contexts from the citing papers. Further, the system is configured to curate a dataset to fine-tune retrievers and evaluate the MIR task by extending the multi-cite dataset originally designed for citation intent classification. To fine-tune a more effective retrieval model for MIR, a triplet loss is formulated by synthesizing samples from the directed MAG. Further, a reasoning-intensive process essential for the MIR is simulated by extending the existing LLM-based re-rankers. This extension leads to significant performance improvement.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
receiving (302), via an Input/Output (I/O) interface, a research problem and a motivation of the research problem as a query for a methodology inspiration retrieval (MIR) task;
curating (304), via the one or more hardware processors, a predefined dataset to derive a directed Methodology Adjacency Graph (MAG), wherein the predefined dataset comprising a plurality of research proposals and one or more associated research papers;
formulating (306), via the one or more hardware processors, a joint triplet loss by synthesizing a plurality of samples from the directed MAG for improvements in the MIR task, wherein the plurality of samples is in a single batch so that each of the plurality of samples is optimized across all three relationships simultaneously;
fine-tuning (308), via the one or more hardware processors, a predefined retrieval model using the derived directed MAG and the formulated joint triplet loss;
executing (310), via the one or more hardware processors, the received query using the fine-tuned retrieval model to obtain results; and
simulating (312), via one or more hardware processors, a reasoning-intensive process essential for the MIR task by extending a predefined large language model (LLM)-based re-ranking using a multi-step framework to improve rankings of the results obtained to cover maximum ground truth methodologically relevant cited papers for respective proposals.

2. The processor-implemented method (300) as claimed in claim 1, wherein curating the predefined dataset comprising:
fetching a title and an abstract from each of the one or more associated research papers from a Multicite's full-text dump;
formulating a research proposal by extracting a research problem and motivation from the abstract using the predefined LLM;
fetching a plurality of cited papers from the Multicite's full-text dump based on citation context and intent of the formulated research proposal;
determining a list of citation contexts and corresponding plurality of cited papers using a semantic scholar; and
identifying a syntactic match between the determined citation contexts in the semantic scholar and the citation contexts in the multi-cite to link a plurality of cited papers in the semantic scholar with the formulated research proposal.

3. The processor-implemented method (300) as claimed in claim 1, wherein curating the predefined dataset comprising:
extracting a bibliography section of each of the one or more associated research papers;
feeding the extracted bibliography section along with the citation context of each of the one or more associated research papers to the predefined LLM to determine an entry of each of one or more cited papers in the extracted bibliography; and
fetching a paper based on a title of the determined entry of each of the one or more cited papers in the extracted bibliography.

4. The processor-implemented method (300) as claimed in claim 1, wherein the multi-step framework to improve the rankings of the results obtained comprising:
analyzing a core problem using the predefined LLM to list one or more sub-problems and generate a generic action plan to solve the problem;
analyzing the applicability of each retrieved paper towards solving the core problem; and
providing a relevance judgment to assess the paper's methodological relevance, given a criteria for assessment along with outputs from (i) and (ii).

5. The processor-implemented method (300) as claimed in claim 1, wherein edges of the directed MAG are annotated with citation intents pivotal for the MIR task.

6. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
receive, via an Input/Output (I/O) interface, a research problem and a motivation of the research problem as a query for a methodology inspiration retrieval (MIR) task;
curate a predefined dataset to derive a directed Methodology Adjacency Graph (MAG), wherein the predefined dataset comprising a plurality of research proposals and one or more associated research papers;
formulate a joint triplet loss by synthesizing a plurality of samples from the directed MAG for improvements in the MIR task, wherein the plurality of samples is in a single batch so that each of the plurality of samples is optimized across all three relationships simultaneously;
fine-tune a predefined retrieval model using the derived directed MAG;
execute the received query using the fine-tuned retrieval model to obtain results; and
simulate a reasoning-intensive process essential for the MIR task by extending a predefined large language model (LLM)-based re-ranking using a multi-step framework to improve rankings of the results obtained to cover maximum ground truth methodologically relevant cited papers for respective proposals.

7. The system (100) as claimed in claim 6, wherein curating the predefined dataset comprising:
fetching a title and an abstract from each of the one or more associated research papers from a Multicite's full-text dump;
formulating a research proposal by extracting a research problem and motivation from the abstract using a predefined LLM;
fetching a plurality of cited papers from the Multicite's full-text dump based on citation context and intent of the formulated research proposal;
determining a list of citation contexts and corresponding plurality of cited papers using a semantic scholar; and
identifying a syntactic match between the determined citation contexts in the semantic scholar and the citation contexts in the multi-cite to link a plurality of cited papers in the semantic scholar with the formulated research proposal.

8. The system (100) as claimed in claim 6, wherein the curating of the predefined dataset comprises:
extracting a bibliography section of each of the one or more associated research papers;
feeding the extracted bibliography section along with the citation context of each of the one or more associated research papers to the predefined LLM to determine an entry of each of one or more cited papers in the bibliography; and
fetching a paper based on title of the determined entry of each of the one or more cited papers in the bibliography.

9. The system (100) as claimed in claim 6, wherein the curating of the predefined dataset comprises:
analyzing a core problem using the predefined LLM to list one or more sub-problems and generate a generic action plan to solve the problem;
analyzing the applicability of each retrieved paper towards solving the core problem; and
providing a relevance judgment to assess the paper's methodological relevance, given a criteria for assessment along with outputs from (i) and (ii).

10. The system (100) as claimed in claim 6, wherein edges of the directed MAG are annotated with citation intents pivotal for the MIR task.

11. One or more non-transitory machine-readable information storage mediums comprising one or more instructions which when executed by one or more hardware processors cause:
receiving, via an Input/Output (I/O) interface, a research problem and a motivation of the research problem as a query for a methodology inspiration retrieval (MIR) task;
curating a predefined dataset to derive a directed Methodology Adjacency Graph (MAG), wherein the predefined dataset comprising a plurality of research proposals and one or more associated research papers;
formulating a joint triplet loss by synthesizing a plurality of samples from the directed MAG for improvements in the MIR task, wherein the plurality of samples is in a single batch so that each of the plurality of samples is optimized across all three relationships simultaneously;
fine-tuning a predefined retrieval model using the derived directed MAG;
executing the received query using the fine-tuned retrieval model to obtain results; and
simulating a reasoning-intensive process essential for the MIR task by extending a predefined large language model (LLM)-based re-ranking using a multi-step framework to improve rankings of the results obtained to cover maximum ground truth methodologically relevant cited papers for respective proposals.

12. The one or more non-transitory machine-readable information storage mediums as claimed in claim 11, wherein curating the predefined dataset comprising:
fetching a title and an abstract from each of the one or more associated research papers from a Multicite's full-text dump;
formulating a research proposal by extracting a research problem and motivation from the abstract using the predefined LLM;
fetching a plurality of cited papers from the Multicite's full-text dump based on citation context and intent of the formulated research proposal;
determining a list of citation contexts and corresponding plurality of cited papers using a semantic scholar; and
identifying a syntactic match between the determined citation contexts in the semantic scholar and the citation contexts in the multi-cite to link a plurality of cited papers in the semantic scholar with the formulated research proposal.

13. The one or more non-transitory machine-readable information storage mediums as claimed in claim 11, wherein curating the predefined dataset comprising:
extracting a bibliography section of each of the one or more associated research papers;
feeding the extracted bibliography section along with the citation context of each of the one or more associated research papers to the predefined LLM to determine an entry of each of one or more cited papers in the extracted bibliography; and
fetching a paper based on a title of the determined entry of each of the one or more cited papers in the extracted bibliography.

14. The one or more non-transitory machine-readable information storage mediums as claimed in claim 11, wherein the multi-step framework to improve the rankings of the results obtained comprising:
analyzing a core problem using the predefined LLM to list one or more sub-problems and generate a generic action plan to solve the problem;
analyzing the applicability of each retrieved paper towards solving the core problem; and
providing a relevance judgment to assess the paper's methodological relevance, given a criteria for assessment along with outputs from (i) and (ii).

15. The one or more non-transitory machine-readable information storage mediums as claimed in claim 11, wherein edges of the directed MAG are annotated with citation intents pivotal for the MIR task.
